# EUROPEAN PATENT APPLICATION

(11) **EP 1 564 470 A1**
(43) Date of publication of application: **17.08.2005**
(21) Application number: 04425081.9
(22) Date of filing: 10.02.2004
(51) Int. Cl.: F16L 19/02

(54) **A connector device and assembly method therefor**

(71) Applicant: Tieffe S.r.l., 27010 Cura Carpignano (Pavia) (IT)
(72) Inventor: Vaghi, Luigi, 29100 Piacenza (IT)
(74) Representative: Gerbino, Angelo

(57) **Abstract**

The connector device comprises a sleeve (12) having a first circumferential groove (18) on the outer surface of its head end, a nut (20) having a second circumferential groove (22) on its inner surface and disposed about the head end of the sleeve (12), and an interference member interposed between the facing grooves (18, 22) in such a way that the nut (20) is rotatably mounted about the head end of the sleeve (12) and is axially retained. The interference member is made in the form of a split elastic ring (28) and the second groove (22) comprises, proceeding in the axial direction towards the distal end of the connector, a first section (24) of lesser depth and a second section (26) of greater depth.

## Description

The present invention relates to a connector device, in particular for connection to a tube through which fluid flows under pressure, and to the associated assembly method.

In more detail, such a connector device comprises a sleeve having a first circumferential groove on the outer surface of its head end, a nut having a second circumferential groove on its inner surface and disposed about the head end of the sleeve, and an interference member interposed between the said first and second facing grooves in such a way that the said nut is mounted rotatably about the head end of the sleeve and axially retained.

A first known technique for realization of such a connector is illustrated in Figures from 1 to 3. In these figures, the sleeve is indicated by the reference numeral 1, the first circumferential groove by the reference numeral 2, the nut by reference numeral 3, the second circumferential groove by the reference numeral 4 and the interference member by the reference numeral 5. This latter is constituted by a wire which is inserted into the two facing grooves 2 and 4 via a radial hole 6 formed in the nut 3.

Once a connector device of this type is connected to a tube containing a fluid under pressure, it is possible that this latter can insinuate itself into the two facing grooves 2, 4 and expel the wire 5 through the hole 6. Consequently, the nut 3 and tube would be free to become axially separated from the sleeve 1 with consequent leakage of the fluid under pressure. Moreover, both the production of the hole 6 through the nut 3 and the introduction of the wire 5 into it are rather difficult operations which complicate the production and assembly processes.

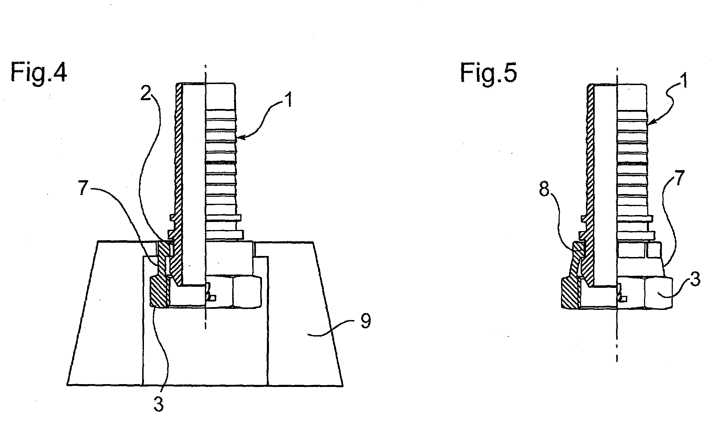

A second known technique for realization of a connector device comprising a nut 3 fitted onto the head end of a sleeve 1 is illustrated in Figures 4 and 5. In this case the nut 3 is provided with a collar 7 having a projection 8 which is located around a groove 2 formed in the outer surface of the sleeve 1, and is caused to penetrate into it by means of a press 9 (Figure 4). The assembly comprising nut 3 and collar 7 has, however, a greater axial extent than that of the constructional arrangements of the previously-described type in which the nut does not have any form of appendage. Consequently, for the purpose of reducing, as far as possible, the overall axial extent of such an assembly, it is necessary to reduce the height of the nut 3, which, however, partially compromises the functionality.

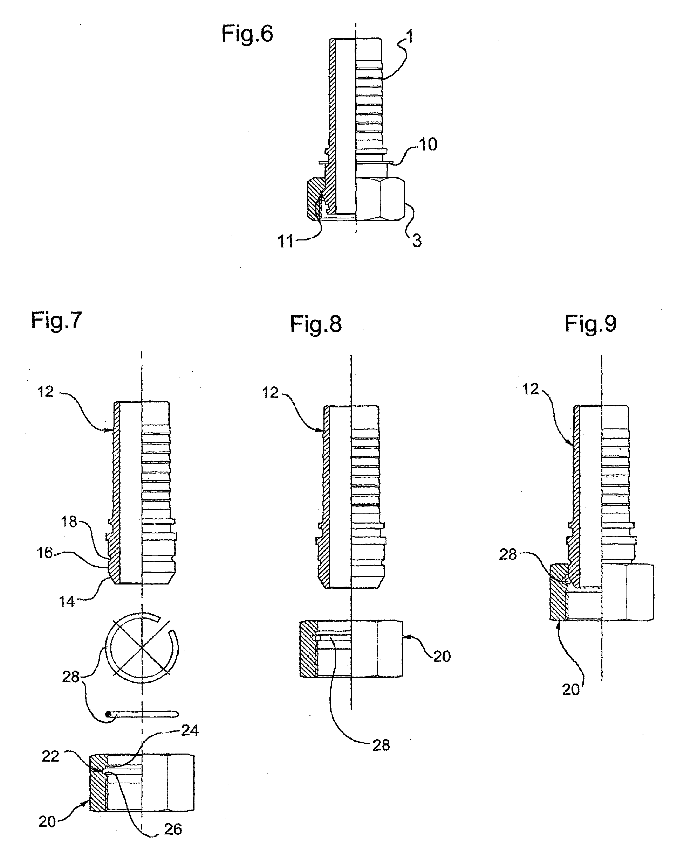

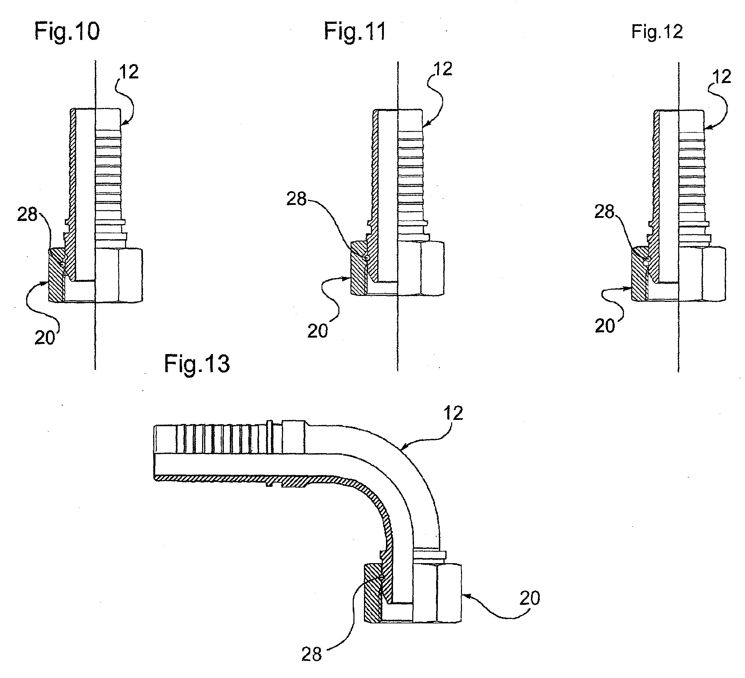

A third known technique for realization of a connector device comprising a nut 3 fitted onto the head end of a sleeve 1 is illustrated in Figure 6. In this case, the nut 3 is maintained in position on the head end of the sleeve 1 by a ring 10 located on this latter outside the nut 3, and by a projection 11 extending from the lateral surface of the sleeve 1. The nut 3, however, has a certain play in the axial direction so that, during storage of the connector device before use, it could slide along the sleeve 1 and become separated from this latter upon removal of the ring 10.

For the purpose of overcoming the above-described disadvantages of the various known constructional arrangements, a connector device and associated assembly method having the characteristics specifically set out in the following claims constitute the subject of the present invention.

The device of the invention is highly reliable and also of simple structure so as not to complicate the production and assembly processes unduly. Moreover, the interference member does not have to be inserted into its seat through a hole formed in the nut so that it is not susceptible of being expelled by sliding backwards along the same route, thus offering a good guarantee of seal. For its part, the nut is not fixed to a collar and thus it can be formed with an adequate height so as to satisfy the requirements of the market. The nut and the sleeve are fixed together axially so that it is not possible to separate them, unless intentionally, by acting from the outside. At the same time, the nut can easily slide on the sleeve during assembly, making this operation easier.

Further characteristics and advantages of the present invention will become evident from the following detailed description, provided purely by way of non-limitative example, with reference to the annexed drawings, in which:

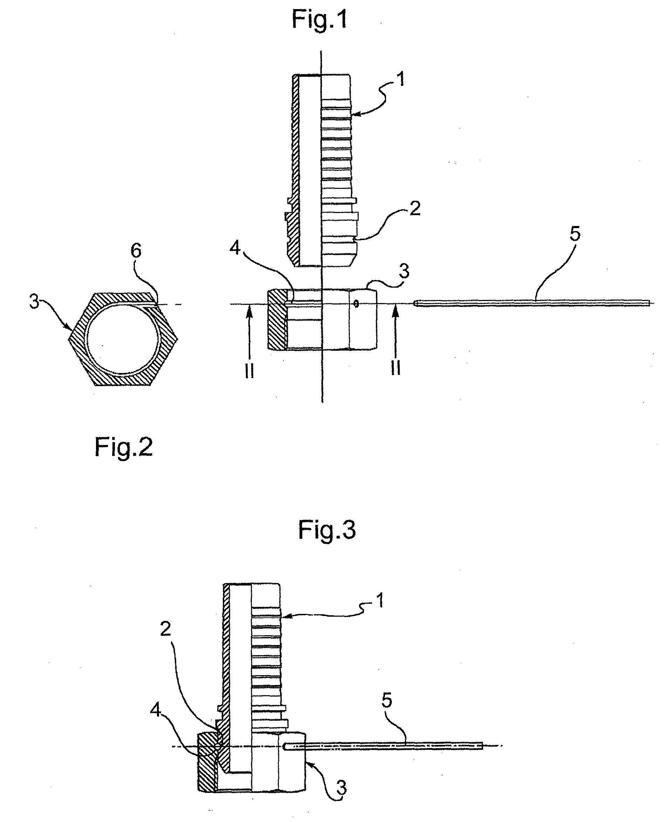

Figure 1 (already described) is an exploded side view of a first prior art connector device;
Figure 2 (already described) is a sectional view taken on the line II - II of Figure 1;
Figure 3 (already described) is a side view of the device of Figure 1 during assembly;
Figures 4 and 5 (already described) are side views of subsequent steps in the assembly method of a second prior art connector device;
Figure 6 (already described) is a side view of a third prior art connector device;
Figure 7 is an exploded side view of a connector device according to the invention;
Figures from 8 to 12 are side views of successive steps in the method for assembly of a connector device according to the invention; and
Figure 13 is a side view of a variant embodiment of connector device according to the invention.

A connector device comprises (Figures 7 and 12) a sleeve 12 having, adjacent the free edge of its head end, a bevel 14 of frusto-conical section. The outer surface of this end continues with a cylindrical section 16 and subsequently has a first circumferential groove 18.

To the head end of the sleeve 12 is associated a nut 20 having a second circumferential groove 22 on its inner surface, which groove 22 is disposed facing the first groove 18 of the sleeve 12. Second groove 22 comprises, proceeding in an axial direction towards the distal end of the connector, a first section 24 of lesser depth and a second section 26 of greater depth.

An interference member formed as a split elastic ring 28 is interposed between the first facing groove 18 and the second facing groove 22 in such a way that the nut 20 is rotatably mounted about the head end of the sleeve 12 and is retained axially. In order to be adequately able to guarantee the security of the coupling, the split ring 28 has, when in the completely circumferentially closed configuration, an inner diameter less than that of the first groove 18.

The method for assembly of the previously-described connector device comprises first the step (Figure 8) of locating the ring 28 within the second groove 22 of the nut 20. Advantageously, to perform such an operation a light compression is exerted on the open ring 28, reducing the circumferential width of its split.

Then, by means of an axial translation movement (Figures from 9 to 12) the nut 20 with the ring 28 introduced therein is fitted onto the head end of the sleeve 12. This operation is facilitated by the bevel 14 of the free edge of head end of the sleeve 12 and by the greater depth of the second section 26 of the groove 22 in which the ring 28 is located when it slides on the cylindrical section 16 of the surface of the sleeve 12. The sliding movement continues until the second groove 22 is facing the first groove 18 of the sleeve 12 with the ring 28 able to contract again and be interposed between the first section 24 of the groove 18 and the facing groove 22. In this position (Figure 12) the connector is ready for use with the nut 20 mounted rotatably about the head end of the sleeve 12 and at the same time retained axially so that it is prevented from becoming inadvertently separated from the sleeve 12.

Figure 13 illustrates a further embodiment of connector of the invention, in which the same or equivalent parts to those previously described have retained, the same reference numerals. The sole difference with respect to the preceding case lies in the fact that the sleeve 12 has an elbow curve rather than being rectilinear. The form of the sleeve, is not, in fact, in any way binding or limiting as far as the realization of the present invention is concerned.

Naturally, the principle of the invention remaining the same, the details of construction and the embodiments can be widely varied with respect to what has been described purely by way of example, without by this departing from its ambit.

## Claims

1. A connector device comprising a sleeve (12) having a first circumferential grove (18) on the outer surface of a head end, a nut (20) having a second circumferential grove (22) on its inner surface and disposed about the head end of the sleeve (12), and an interference member interposed between the said first and second facing grooves (18, 22) in such a way that the said nut (20) is rotatably mounted about the head end of the sleeve (12) and is axially retained,
the said device being **characterised in that** the said interference member is formed as a split elastic ring (28) and the said second groove (22) comprises, proceeding in the axial direction toward the distal end of the connector, a first section (24) of lesser depth and a second section (26) of greater depth.

2. A connector device according to claim 1, **characterised in that** the outer surface of the head end of the sleeve (12) has, adjacent its free edge, a bevel (14).

3. A connector device according to claim 2, **characterised in that** the said bevel (14) has a frusto-conical section.

4. A connector device according to claim 2 or 3, **characterised in that** the outer surface of the head end of the sleeve (12) has a cylindrical section (16) interposed between the said bevel (14) and the said first groove (18).

5. A method for assembly of a connector device according to any preceding claim, comprising the steps of:
- locating the split ring (28) within the second groove (22) of the nut (20) and,
- fitting the said nut (20) on to the head end of the sleeve (12) with an axial translation movement, with the ring (28) lodged within the second section (26) of the second groove (22) until the second groove (22) faces the first groove (18) of the sleeve (12) with the ring (28) interposed between the said facing grooves (18,22) in such a way that the nut (20) is rotatably mounted about the head end of the sleeve (12) and is axially retained.
